# EUROPEAN PATENT SPECIFICATION

(11) **EP 1 239 740 B1**
(45) Date of publication and mention of the grant of the patent: **17.08.2005**
(21) Application number: 00981526.7
(22) Date of filing: 13.12.2000
(51) Int. Cl.: A23K 1/14, A23K 3/00

(54) **A METHOD OF CONTINUOUS SEPARATION OF VEGETABLE BIOMASS INTO A FLUID PHASE AND A SOLIDS CONTAINING PHASE OF PULPY CONSISTENCE**
VERFAHREN ZUM KONTINUIERLICHEN ABTRENNEN VON PFLANZLICHER BIOMASSE IN EINER FLÜSSIGEN PHASE UND IN EINER FESTSTOFFHALTIGEN PHASE MIT BREIARTIGER KONSISTENZ
PROCEDE DE SEPARATION CONTINUE DE BIOMASSE VEGETALE EN PHASE FLUIDE ET DE SOLIDES RENFERMANT UNE PHASE DE CONSISTANCE PULPEUSE

(30) Priority: 20.12.1999 EP 99125370
(43) Date of publication of application: 18.09.2002
(73) Proprietor: 2B BIOTEC AG, 8600 Dübendorf (CH)
(72) Inventor: HANSEN, Graeme, CH-8049 Zürich (CH); GRASS, Stefan, CH-8308 Illnau (CH)
(74) Representative: Rehberg Hüppe + Partner
(86) International application number: PCT/IB2000/001864
(87) International publication number: WO 2001/045523

(56) References cited:
- EP-A- 0 213 605
- GB-A- 1 377 438
- US-A- 4 468 463

## Description

The present invention is concerned with a method of continuous separation of vegetable biomass into a fluid phase and a solids containing phase of pulpy consistence. Both the fluid phase and the solids containing phase are adapted for further utilization i.e. they are industrially valuable. The starting material of the method is vegetable biomass that is taken essentially in a moist state.

Vegetable biomass to which the method of the invention can be applied can be taken either in a naturally moist state or in an industrially processed moist state.

An example of vegetable biomass taken in an industrially processed moist state is spent grain, more particularly spent grain utilized in the production of beer, whisky etc.

An example of vegetable biomass taken in its naturally moist state is fresh raw material from which fodder is made, more particularly grass from pastureland. More generally, examples of vegetable biomass in a naturally moist state that can be taken into consideration are fresh plants or parts of plants with especially high protein content and/or sugar content and their fresh residues. This includes in particular clover, lucerne and grass (mentioned above), but also bean plants, soybean, sorghum, mustard, collard greens, turnips, banana leaves, bagasse, grape skins, husks/skins, residue of fruit such as residue of citrus fruits and pitted fruit, and also ranking water plants such as duck-weed and water hyacinth, and several others of that nature.

It is known e.g. from US-A-3684520 and/or from FR-A-2294647 and/or FR-A-2294648 to process chopped fresh leafy green crops or other chopped vegetable biomass taken essentially in its naturally moist state, first in a mixer for incorporating desired additives and then in a press to produce a press juice from which proteins and/or chlorophyll may be extracted and a press cake that may be dried economically.

In US-A-3684520 it is more particularly disclosed that pressing causes a disruption of the natural plant structure, allowing various substances that are normally isolated from one another by the structural organization of the plant to come into mutual contact, which causes some of these substances to experience a degradation.

In FR-A-2294647 and/or FR-A-2294648 it is more particularly disclosed to feed the mixer with press juice that is recycled from the press so as to admix recycled press juice to the material to be pressed, the purpose being to use the heat and, if any, the chemicals contained in the recycled juice. The weight of currently recycled press juice is disclosed to be about three times the dry weight of the currently processed biomass and also to be smaller than the weight of press juice currently output for product extraction. It is also disclosed to subject the biomass, prior to the mixing operation, to a mechanical disintegration such as dilaceration or crushing in a hammer mill.

Also, a process somewhat similar to that of the prior art mentioned above is known e.g. from EP-A-0213605, in which biomass from sugar cane (not bagasse) is subjected to dry fractionation for production of respective fibrous and non-fibrous fractions; the fibrous fraction corresponding to sclerenchyma cells comprising rind and fibrovascular bundles, and the non-fibrous fraction corresponding to parenchyma cells. Pieces of sugar cane are first subjected to the disintegrating action of blades so as to obtain chopped up material having dimensions of 2 cm to 6 cm, then dried, and subsequently fractionated. The non-fibrous fraction is a solid material of high sugar content suitable for animal feeding or as raw material for sugar production. Fibre production is not a disclosed object of this process.

In GB-A-1377438 it is more particularly disclosed to feed the vegetable biomass provided in a naturally moist state to a vessel provided with rotating blades and to recycle thereto a portion of the aqueous juice separated from the vegetable biomass, so as to reduce the size of the raw material suspended in the aqueous juice. The process comprises four major operations: formation of green juice; separation of chloroplastic proteins from the green juice, leaving a residue termed clear juice; separation of cytoplasmic proteins from the clear juice, leaving a residue termed brown juice; and concentration of brown juice either to give a syrup or be recycled to the first operation. The weight of recycled liquid is 1 to 3 times the weight of the vegetable biomass (which is alfalfa). The process is said to produce a valuable juice and leave a dried portion appropriate for animal feeding. Fibre production is not a disclosed object of this process.

In US-A-4468463 it is more particularly disclosed to feed manure to a grinder and to recycle thereto a portion of the aqueous juice separated from the manure.

In order to process a flowing suspension of vegetable biomass in aqueous juice for fibre production, and since the fibres in the biomass form cell walls that lock up valuable organic substances such as proteins and other desired products in the cells, some comminuting action will be required to disintegrate the cell walls so as to liberate and allow to recover the valuable organic substances.

In the prior art mentioned above, this comminuting action is achieved by pressing, crushing and/or chopping, which causes the fibres to be shortened randomly. Moreover, this type of treatment does not separate and single out the fibres from each other. Also, pressing is known to be a rather inefficient method of drying when applied to vegetable material containing an appreciable percentage of integral cells having undisrupted cell walls.

A known type of comminutor is usable to disintegrate cell walls and single out fibres of small diameter from each other while preserving fibre length, at least to an appreciable degree. Comminutors of this particular type are disclosed e.g. in the respective published patent or patent application or utility model documents DE-A-2338964, DE-B-3231168, DE-A-3533255, EP-B-0134697, DE-U-78-19825 and DE-U-78-08695, and such comminutors can be purchased e.g. from Siefer Maschinenfabrik GmbH 3 Co. KG, D-42551 Velbert (Germany), cf. for instance (among others) their industrial appliance TRIGONAL^{(R)} type SM 290. Essentially, a comminutor of this particular type is a rotary comminutor having at least one comminuting stage comprised of respective stator and rotor elements associated with each other and having respective operative surfaces spaced from each other by an associated operative gap of the stage, said surfaces being arranged to face each other across the associated operative gap, each of said surfaces being equipped with cutting elements that are directed into the associated operative gap and terminated therein by a cutting edge, an effective shearing gap of a comminuting stage being defined as a smallest distance of approach between the respective cutting edges of the one and the other operative surface in the associated operative gap of the respective stage when the comminutor is operated.

Conventionally, a comminutor of this particular type is fed with a suspension of the product to be comminuted in some carrier fluid or medium. As applicable to vegetable biomass, this will require that some aqueous fluid be added, for the natural moisture of the vegetable biomass will not be sufficient to provide the required suspension, as the comminuting action would produce a paste that would tend to clog the comminutor. However, for obvious economical reasons the quantity of added aqueous fluid conventionally will be kept as low as technically possible for proper operation of the comminutor i.e. not higher than required for proper handling of the material, which means that the vegetable biomass is fed to the comminutor as a rather concentrated suspension of the vegetable biomass in aqueous fluid; cf. for instance the teaching of GB-A-1377438 mentioned above, in which the weight of recycled liquid is 1 to 3 times the weight of the vegetable biomass. Hence, the comminutor will produce a slurry of comminuted biomass material suspended in aqueous juice. This slurry is eventually partitioned into aqueous juice and mush, both of which are then utilized to the best possible extent.

Surprisingly, it has been found that where the usual mode of operation of a comminutor of the type mentioned above is modified so that appreciably more added aqueous fluid is used than would be required for proper handling of the material i.e. for proper operation of the comminutor, this modification i.e. the use of much more added aqueous fluid improves the comminutor's capacity to single out fibres of small diameter from each other, yet to preserve fibre length in the resulting slurry, and also to act upon the cells of the vegetable biomass to open them and allow their content to be liberated into the aqueous juice.

To achieve said effects, preferably, a final comminuting stage of the comminutor has an effective shearing gap whose width is larger than about 10 times a predetermined maximum fibre thickness to be produced to end up in the solids containing phase.

Said surprising effects appear to be brought about by the generation of a gradient of flow speed within the flowing suspension, which gradient is sufficient to cause a shearing effect that acts upon the cells of the vegetable biomass to open them and allow their content to be liberated into the aqueous juice, leaving a residue that is mainly made up of fibres. It is believed that the shearing effect causes the fibres to become oriented in the flow direction and hence, prevents them from being cut across their longitudinal dimension in the comminutor.

However, similar surprising effects are also brought about in a shearing apparatus that is devoid of any cutting elements. Such a shearing apparatus has at least one shearing stage comprised of respective stator and rotor elements associated with each other and having respective shearing surfaces spaced from each other by an associated effective shearing gap of the stage, said shearing surfaces being arranged to face each other across the associated effective shearing gap.

Hence, said surprising effects are not only due to an enhanced flow of carrier fluid through a processing apparatus that has cutting elements, and to the concomitant dilution of the slurry; said surprising effects are essentially due, as said above, to the generation of a gradient of flow speed within the suspension flowing through the processing apparatus, which gradient causes a shearing effect that acts upon the cells of the vegetable biomass. It is believed that the strong shearing effect also disrupts the structure of cells in the biomass, which will explain the high percentage recovery of valuable products from the aqueous juice of the process, such as proteins and/or chlorophyll as well as other organic products e.g. usable to produce fermentation products and/or biogas. This also will explain that it is easy to achieve, e.g. by pressing, a particularly low water content in the mush produced from the slurry that flows out of the processing apparatus - it is believed that the shear-disrupted structure of cells in the fibres makes the latter contain less water and hence, easier to be dried than could be achieved up to now.

Eventually, when the so-treated diluted slurry has been partitioned, both the resulting aqueous juice and mush appear to have properties not obtained up to now that make them industrially more valuable than aqueous juice and mush obtained from a concentrated slurry, as will be explained below more in detail.

Accordingly, it is an object of the present invention to provide a method of the kind defined above in which vegetable biomass is subjected to a process that involves the generation of a gradient of flow speed within the flowing suspension, which gradient is sufficient for acting upon cells of the vegetable biomass to open said cells and allow a content thereof to be liberated into the aqueous juice, whereas a residue is left that is mainly made up of fibres and ends up in the solids containing phase, the so produced aqueous juice and mush being industrially more valuable, more particularly, their utilization being technically and/or economically more favourable than what has been attained up to now.

It is a another object of the present invention to provide a method of the kind defined above in which the slurry is partitioned into a solids containing phase of pulpy consistence that is a fibres containing mush and a fluid phase that is an aqueous juice, the mush containing a high proportion of valuable long thin fibres that can be more economically dried and are capable of more interesting utilization than up to now, the aqueous juice allowing easy separation or direct use of valuable organic substances such as proteins, chlorophyll, fermentable products etc. originating from the cells.

It is still another object of the present invention to provide a method of the kind defined above in which the economical aspect of the turnover of energy, input and output materials can be optimized overall, and, more particularly, there is currently fed to the system significantly less fresh water than would correspond to the flow of aqueous fluid through the gradient-generating processing apparatus and also, in which all resulting products i.e. all of the aqueous juice and mush are utilized and there is no appreciable quantity of waste product.

These objects are attained according to the present invention by means of the combination of the method steps defined in claim 1, preferred embodiments of the method being defined in the appended claims.

Some particular aspects of the method of the invention are the following:
The suspension of the biomass in the carrier fluid is preferably diluted by more than four times the carrier fluid that would be required merely in view of conventional technical and economical considerations. In other words, the employed quantity of carrier fluid is much larger than usual, preferably five times the usual quantity.
Optionally, to facilitate feeding, the vegetable biomass supplied as starting material can be precut for reduction in size prior to being fed to the processing apparatus, more particularly prior to being admixed with carrier fluid. Typically, after reduction in size the material will be made up of elongated thin pieces whose length does not exceed about 5 cm. This precutting may be dispensed with where the vegetable biomass is made up of short fibre material, e.g. spent grain.
To save the processing apparatus, any accompanying material denser than vegetable biomass that may be contained in the starting material, e.g. stones, gravel, sand, dust and other similar materials, is allowed to separate by gravity from the mixture of starting material and aqueous juice, which separation is of course facilitated by the high dilution of the starting material in the mixture.

Subsequent to the passage through the processing apparatus, the slurry of biomass suspended in the carrier fluid that flows out of the processing apparatus is separated into aqueous juice and mush, and in its turn the aqueous juice is divided in two portions. A first one of these portions is recycled to be re-used as carrier fluid in the processing apparatus. The other or second portion is utilized e.g. for the extraction of valuable products. Also, the quantity of this second portion of aqueous juice that is directed to leave the process has a water content that approximately maintains the water balance and makes up both for the quantity of water that enters the process in form of moisture contained in the vegetable biomass provided as starting material and the quantity of water that leaves the process in form of moisture contained in the mush.

For short, in the method of the invention, (a) about the same quantity of fluid (mainly water) will currently enter the process in form of moisture contained in the vegetable biomass provided as starting material and leave the process in form of aqueous fluid residue of the extraction of valuable products from the aqueous juice and in form of moisture contained in the mush; and (b) a much larger quantity of fluid will currently flow through the processing apparatus than will currently enter and leave the process as said above.

Actually, the quantity of fluid that is made to flow through the processing apparatus will depend on the dry matter content of the provided vegetable biomass i.e. the supplied starting material that currently enters the process, and will be adjusted to values of about 20 to about 500 times and preferably of about 50 to about 200 times (w/w) the dry matter content of the material. Hence, the quantity of fluid made to flow through the processing apparatus will be much larger than the fluid quantities approximately equal to each other that enter and leave the process, respectively.

Whether the processing apparatus is embodied as a rotary comminutor or a shearing apparatus of the kind defined above, the large quantity of fluid that is made to circulate in the processing apparatus makes it feasible to construct and adjust the latter to have a final stage with a fairly large effective shearing gap. Actually, the effective shearing gap will be optimized according to a number of parameters including, but not limited to, the kind of vegetable biomass used as supplied starting material, the type of processing apparatus used, the latter's rotational speed and the mutual arrangement of its operative surfaces. The effective shearing gap will typically be adjusted to have a width that is larger than about 10 times a predetermined maximum fibre width to be produced to end up in the solids containing phase, and preferably, in any stage of the processing apparatus the effective shearing gap has a width that is larger than about 1 mm.

In consideration of the fluid flow and gradient of flow speed within the flowing suspension, even such a fairly large effective shearing gap provides for a strong shearing action on the biomass material that is suspended in aqueous juice, which results in the production of fibres of biomass material of preserved fibre length, for instance of long thin fibres typically a few centimetres long and up to a few tenth of millimetre in diameter. Up to now such long thin fibres of biomass material could not be produced economically from biomass material in a comminutor, and it was not known that they might be produced at all in a shearing apparatus.

The long thin fibres that can now be produced from the biomass material by means of the invention make it possible to use the fibre part of the biomass material in new ways and for new products other than before. By way of example, it is now possible to go beyond the usual production of small biocompatible pellets such as fodder pellets and produce larger biocompatible products of high strength for horticulture, building and similar purposes, for instance mats, non-wovens, boards, moulded parts and extruded parts.

The invention will now be described and exemplified below in closer detail with reference to the accompanying drawing, wherein
- Fig. 1: shows a longitudinal section of a comminuting stage of a rotary comminutor according to the disclosure of EP-B-0134697 for the purpose of illustrating the state of the art; and
- Fig. 2: is a block diagram that illustrates schematically the method steps of the present invention.

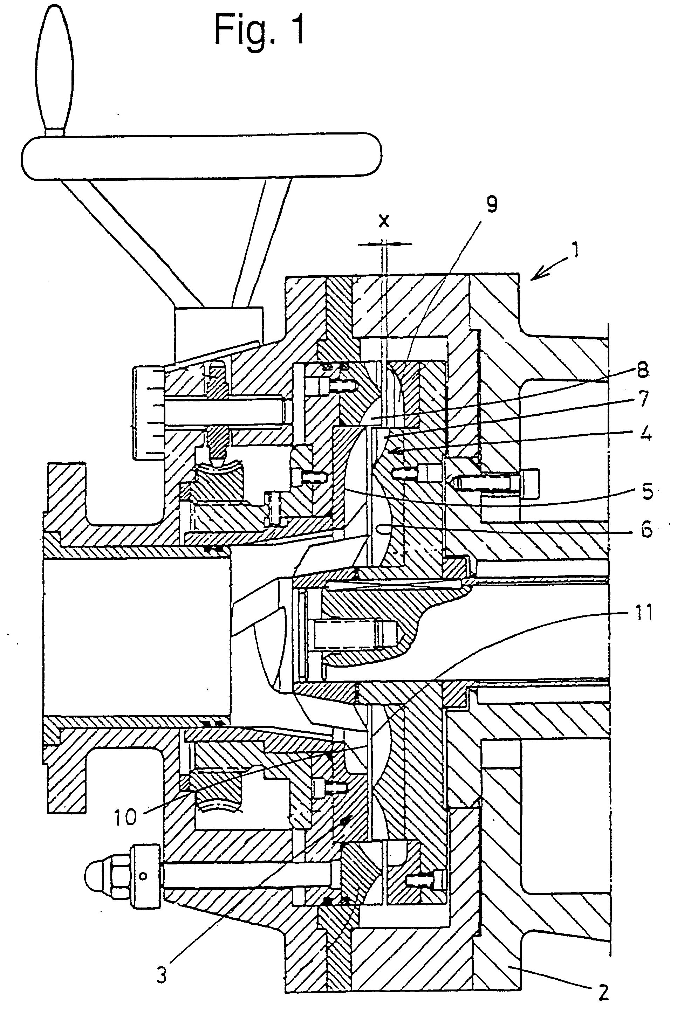

In Fig. 1 an exemplary processing apparatus is shown as a state-of-the-art rotary comminutor, generally referenced 1, according to the disclosure of EP-B-0134697. There is shown a longitudinal section of a portion the rotary comminutor 1 that corresponds to one comminuting stage that is generally referenced 2. In this comminuting stage 2 a stator element 3 and a rotor element 4 are associated with each other and have respective operative surfaces 5 and 6 spaced from each other by an associated operative gap 7 of the stage 2, the operative surfaces 5 and 6 being arranged to face each other across the associated operative gap 7. The operative surfaces 5 and 6 are each equipped with respective cutting elements 8 and 9 that are directed into the associated operative gap 7 and each terminated therein by respective cutting edges 10 and 11.

As the rotary comminutor 1 is operated this will cause a variation of the distance between the cutting edges 10 and 11 that are located on the stator 3 and the rotor 4, respectively, and are correspondingly arranged at the one and the other operative surface 5 and 6. Hence, an effective shearing gap can be defined as a smallest distance of approach between the latter cutting edges 10 and 11 within the associated operative gap 7 of the comminuting stage 2. This effective shearing gap has a width illustrated on Fig. 1 by means of two auxiliary lines that are drawn parallel to each other as an extension of respective cutting edges 10 and 11 and are spaced from each other by a distance referenced x, hence, it should be understood that the effective shearing gap is designated by reference x and the width of the effective shearing gap is the value or measure of x.

Another exemplary processing apparatus that, however, is not shown in the drawings is embodied as a shearing apparatus of the kind mentioned above, data of which can be found below in Example 4.

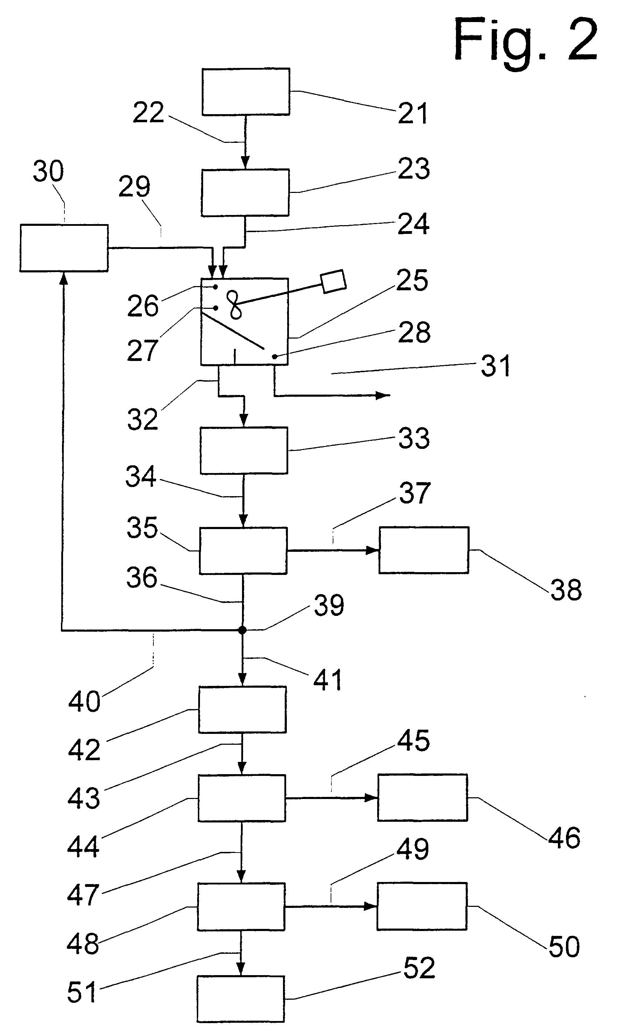

In Fig. 2 the method steps of the present invention are illustrated with the help of a block diagram.

It shall be understood that in the following the method steps of the present invention are described in sequence but the method of the present invention is meant to be performed continuously and hence, in continuous operation the method steps take place currently and simultaneously and the quantities referred to must be understood as flow quantities, the flow rates of which can be compared with each other e.g. by weight per unit time.

It shall be understood that in the following the method steps of the present invention are described with reference to a processing apparatus that is embodied as a comminutor of the type disclosed above and described with reference to Fig. 1, but this is but an example and another example of an embodiment of the processing apparatus may be taken to be a shearing apparatus of the type disclosed above.

Block 21 illustrates a supplied starting material that is eventually subjected to the method steps of the present invention and consists of vegetable biomass taken essentially in its naturally moist state.

For exemplary purposes this supplied starting material may be grass from pastureland. In this case, arrow 22 illustrates that the supplied starting material is fed to a cutting machine 23 of any known and appropriate type for being subjected therein to a precutting operation so as to become reduced in size as may be necessary for performing the subsequent method steps. Typically, after reduction in size the precut grass material will be made up of sectioned blades of grass whose length does not exceed e.g. about 5 cm.

The precut material that exits the cutting machine 23 is shown by arrow 24 to be fed to a conditioning vessel generally designated by 25. As Fig. 2 schematically illustrates, located in an upper part of the conditioning vessel 25 the latter has a mixing zone 26 equipped with stirring means 27, and the conditioning vessel 25 also has a settling zone 28 located below the mixing zone 26.

More precisely, as shown by arrow 24 the precut material that exits the cutting machine 23 is fed to the mixing zone 26 of the conditioning vessel 25. As shown by arrow 29, there is also fed to this mixing zone 26 an aqueous juice illustrated by block 30. As will be explained below, this aqueous juice is recycled to the mixing zone 26 of the conditioning vessel 25 from a subsequent step of the method. With the help of the stirring means 27 the material and the aqueous juice fed to the mixing zone 26 of the conditioning vessel 25 as shown by arrows 24 and 29, respectively, are stirred together to produce a mixture thereof within the mixing zone 26 of the conditioning vessel 25.

With the grass from pastureland taken as starting material for exemplary purposes, this mixing has been made possible by the precutting operation that has previously taken place in the cutting machine 23, as described above.

Where for further exemplary purposes a starting material is taken that is naturally made up of short fibre material, e.g. when the starting material is spent grain, the precutting operation and the cutting machine 23 may be dispensed with. Hence, in this case the arrow 22 will directly lead into the arrow 24, i.e. the supplied starting material 21 will be fed directly to the mixing zone 26 of the conditioning vessel 25.

Some foreign material such as stones, gravel, sand, dust and other similar materials may have entered the conditioning vessel 25 together with the supplied starting material 21. Such accompanying material is generally denser than vegetable biomass and will separate by gravity from the mixture of starting material and aqueous juice while the mixing proceeds. The separated foreign material will then sink from the mixing zone 26 of the conditioning vessel 25 to the settling zone 28 of the conditioning vessel 25 to be collected therein and subsequently discharged and disposed of, as illustrated by arrow 31.

The mixture of starting material and aqueous juice from which the foreign material has been removed as described above is fed from the mixing zone 26 of the conditioning vessel 25 to a comminutor 33, as illustrated by arrow 32, while the comminutor 33 is operated. The comminutor 33 can be of the same type as the rotary comminutor 1 described above with reference to Fig. 1, or it can be any equivalent thereof, for instance it can be similar to a disk refiner commonly used in paper making industry.

The operation of the comminutor 33 on the mixture of starting material and aqueous juice fed thereto eventually produces a slurry of comminuted biomass material suspended in aqueous juice.

This slurry is then fed from the comminutor 33 to a separator 35, as illustrated by arrow 34. In this separator 35, the slurry is partitioned into aqueous juice, as illustrated by arrow 36, and mush, as illustrated by arrow 37. This mush has a pulpy consistence and is eventually removed from the separator 35 for further utilization, as illustrated by block 38 to which arrow 37 leads. Typically applicable to grass from pastureland taken as supplied starting material for exemplary purposes in this description, but also applicable to many other starting materials, the removed mush 38 will be utilized as raw wet fibre starting material of pulpy consistence for the production of fibre products of high strength thanks to the long thin fibres contained therein. As mentioned above, such products are biocompatible and may be made appreciably large, so that they are usable for various horticulture, building and similar purposes, for instance in making mats, non-wovens, boards, moulded parts and extruded parts.

Optionally, other organic products can also be extracted from the removed mush 38 for instance by fermentation and/or enzyme degradation of the raw wet fibre starting material.

The aqueous juice removed from the separator 35 as illustrated by arrow 36 is divided at branching point 39 in two unequal portions, a major portion of which is illustrated by arrow 40 and a minor portion of which is illustrated by arrow 41. In continuous operation, hence understood per unit time, the ratio by weight of the major portion of the aqueous juice (arrow 40) to the minor portion of the aqueous juice (arrow 41) is selected to provide for approximate balance by weight between water contained both in the aqueous juice of the minor portion (arrow 41) and in form of moisture in the removed mush (arrow 37), on the one hand, and in form of moisture in the vegetable biomass provided as starting material and about to be processed (arrows 22 and/or 24), on the other hand.

The major portion of the aqueous juice that is removed from the separator 35 is recycled (arrow 40) to the mixing zone 26 of conditioning vessel 25. Incidentally, if some temperature control is required in the process it is possible to provide for control of the temperature of the recycled aqueous juice.

The minor portion of the aqueous juice is removed from the separator 35 for subsequent utilization (arrow 41), an example of which will be described below.

Typically applicable to grass from pastureland taken as supplied starting material for exemplary purposes in this description, but also applicable to many other starting materials, to obtain the desired high strong shearing and comminuting action and produce the desired long thin fibres from the biomass material the ratio by weight (per unit time) of the major portion of the aqueous juice to the minor portion of the aqueous juice is preferably adjusted to be greater than about 4:1, i.e. the flow rate of the major portion of the aqueous juice (arrow 40) will be more than four times by weight the flow rate of the minor portion of the aqueous juice (arrow 41).

Also typically applicable to grass from pastureland taken as supplied starting material for exemplary purposes in this description, but also applicable to many other starting materials, the comminutor 33 may preferably be constructed and operated in such manner that a final comminuting stage thereof has an effective shearing gap, the width of which (referenced x in Fig. 1) is adjusted to be larger than about 1 mm.

The utilization of the minor portion of the aqueous juice removed from the separator 35 may, by way of example, begin with a processing that is illustrated by block 42 to which arrow 41 leads and involves e.g operations such as heating, pH adjustment, settling and the like to precipitate organic products, for instance protein products. The processed mixture is then fed, as illustrated by arrow 43, to a separator such as a decanter, filter, centrifuge or the like that is illustrated by block 44, to separate precipitated organic products from residual fluid.

The separated organic products are then removed, as illustrated by arrow 45, for subsequent utilization. The removed organic products are generally illustrated by block 46 and eventually subjected to operations such as drying by heat and subsequent extraction of organic products and recovery of heat.

For its part, the residual fluid may still contain soluble organic products. Hence, the residual fluid is fed, as illustrated by arrow 47, to an anaerobic fermenter illustrated by block 48 to produce by fermentation, as in conventional waste water plants, biogas whose removal and delivery is illustrated by arrow 49 and clarified water whose removal and delivery is illustrated by arrow 51. The removed biogas is generally illustrated by block 50 and may be utilized for the production of combustion heat that is then recycled to the process e.g. for temperature control of the recycled aqueous juice (arrow 40) and/or drying the extracted organic products (block 46) and/or drying the removed mush 38 and/or the fibre products produced therefrom. The removed clarified water is generally illustrated by block 52 and may be discharged and/or recycled to the process as may be useful.

Alternatively, some instances of the extraction of organic products discussed in the preceding may involve enzyme degradation and concomitant production of enzyme degradation products.

Results obtained by performing the method and method steps of the invention are exemplified in the following, whereby raw fibre is determined according to the Weender method i.e. the amounts indicated in the following do not include hemicellulose.

### Example 1

7692 kg of a mixture of fresh clover and grass (early cut) that contained 13% dry matter itself containing 20,5% raw protein and 16,9% raw fibre were processed according to the method and method steps of the invention as disclosed in the preceding.

This starting material was fed to the process within about 2½ hours, during which time about 100 m³ aqueous juice (the major flow portion of the aqueous juice) was fed and recycled to the conditioning vessel and about 6,2 m³ aqueous juice (the minor flow portion of the aqueous juice) was directed to subsequent utilization, which gives a ratio of about 16:1 by weight between the respective major and minor portions of the aqueous juice. The output of clarified water was about 5,7 m³. In the comminutor, the effective shearing gap had a width of about 2 mm and the average resulting speed of flow of the aqueous juice through the effective shearing gap was computed to be about 7 to 10 m/s.

The recovered products fractions were as follows:
- 888 kg of fibre product after separation and pressing, containing 42% dry matter itself containing 17,9% raw protein and 31,4% raw fibre. Drying of this fibre product would require about 1230 MJ heat.
- 575 kg of wet protein product containing 32% dry matter itself containing 38,3% raw protein and 6,4% raw fibre. Drying of this fibre product would require about 2060 MJ heat.
- About 6000 kg of liquid containing about 5500 kg of water, 370 kg of water soluble organic substances and 72 kg of other substances. Processing this liquid could produce 185 m³ of biogas yielding at least about 450 kWh of electric energy and about 2250 MJ of heat energy that could be recycled to dry the products mentioned above.

It will be apparent from the above results that in this example the weight of the currently recycled aqueous juice is about 100 times the dry weight of the processed vegetable biomass.

The fibre product contained fibres with an average length of 5 to 30 mm and an average diameter of less than 0,1 mm, which gives a fibre product having favourable binding properties. A cold pressing of the fibre product (up to about 8 x 10⁵ N/m²) without any addition of binder allowed to produce boards of various thickness and density (up to 600 kg/m³ after drying). Such boards were suitable (eventually after further processing) for applications such as construction (heat and sound insulation material, flooring material for keeping small animals such as rabbits) and horticulture (substrate material for growing, watering and fertilizing plants). The fibre product is also appropriate e.g. for manufacturing biodegradable composite materials, mats, moulded parts, plant pots, and for manufacturing fodder particularly suitable for horses and rabbits.

The protein product contained about 35-40% raw protein and had properties that made it very suitable as fodder for pigs, poultry and other animals. Also, further processing of this protein product would allow separation and concentration of valuable organic substances such as chlorophyll, linoleic acid, fructans etc.

### Example 2

A batch of 3314 kg of freshly cut permanent pasture (late cut) that contained 18,5% dry matter was processed in a manner similar to that described in Example 1. The processing temperature was 60°C and the effective shearing gap was 2 mm.

The starting material was processed within about 1½ hours with a total liquid flow of about 88 m³ (the major flow portion of the aqueous juice). A total of about 2,1 m³ of aqueous juice was directed to subsequent utilization, which gives a ratio of about 42:1 by weight between the respective major and minor portions of the aqueous juice. The average resulting speed of flow of the aqueous juice through the effective shearing gap was computed to be about 8 to 11 m/s.

The recovered products fractions (no separation of proteins) were as follows:
- 1167 kg of fibre product with a dry matter content of 33%.
- 2,1 m³ of aqueous juice containing 135 kg chemical oxygen demand (COD) which could be converted to about 70 m³ of biogas.

A washing of the fibres allowed to reduce their nitrogen content to less than 0,7% by weight and considerably increase the chemical oxygen demand available for biogas production. The weight of the recycled juice was 153 times the dry weight of the processed vegetable biomass.

### Example 3

1260 kg of fresh spent grain that contained 21% dry matter itself containing 24,2% raw protein and 14,8% raw fibre were processed according to the method and method steps of the invention as disclosed in the preceding.

Again, this starting material was fed to the process within about 16 minutes, during which time about 13,2 m³ aqueous juice (the major flow portion of the aqueous juice) was fed and recycled to the conditioning vessel and about 0,46 m³ aqueous juice (the minor flow portion of the aqueous juice) was directed to subsequent utilization, which gives a ratio of 28,7:1 by weight between the respective major and minor portions of the aqueous juice. In the comminutor, the effective shearing gap had a width of about 2 mm and the average resulting speed of flow of the aqueous juice through the effective shearing gap was computed to be about 8 to 11 m/s.

The recovered products fractions were as follows:
- 536 kg of fibre product containing 28% dry matter itself containing 11,5% raw protein and 20,7% raw fibre.
- 59 kg of wet protein product containing 35% dry matter itself containing 62,0% raw protein and 4,4% raw fibre.
- About 1800 kg of liquid containing 56 kg of water soluble organic substances and ash.

It will be apparent from the above results that in this example the weight of the currently recycled aqueous juice is about 50 times the dry weight of the processed vegetable biomass.

The fibre product contained fibres with an average length of 3 to 6 mm and an average diameter of about 0,5 mm. This fibre product was suitable for applications such as a substitute for peat, or for combustion.

The protein product contained about 66% raw protein and had properties that made it very suitable as fodder or even (after further processing) for human consumption, and also as a filler in products such as biodegradable plastics.

The above examples provide an understanding of the method of the invention as disclosed in the preceding. However, it should be understood that the composition and moisture content of the raw material as well as the composition, yield and moisture content of the resulting products may be subject to substantial variation, part of which may be attributed to variation of operating conditions, for instance the temperature of the feed at the separation step or the conditions used for dewatering the fibre products.

### Example 4

In this Example, a shearing apparatus is used that has one shearing stage comprised of a stator and a rotor both of conical shape with a base diameter of about 20 cm and a height of about 10 cm (which gives an angle of about 90° at the apex of the conical shape), arranged coaxial facing each other with the rotor projecting into the stator. The conical surfaces of the rotor and stator each are covered with a rough layer of mineral cast silicon carbide of about 12 mm thickness and about 1,8 µm rugosity or surface roughness, and these rough surfaces are spaced from each other by a conical shearing gap of any appreciable width up to about 2 mm, preferably of about 0,5 mm to about 1,5 mm, most preferably of at least about 1 mm. The rotor is rotated at about 4800 rpm. The stator is truncated to have an axial opening where the aqueous juice is introduced axially into the shearing apparatus at about 25 m³/hour to eventually be discharged radially at the base of the conical gap.

When this shearing apparatus is fed a slurry containing about 1% by weight of dry solids based on a mixture of fresh clover and grass (early cut) as in Example 1 or of freshly cut permanent pasture (late cut) as in Example 2, the resulting fibre product will contain fibres with an average length of about 10 mm to about 40 mm and an average diameter of less than about 0.1 mm, which gives a fibre product having favourable binding properties as in the Examples 1 and 2.

### List of Reference Numerals

- x: width of the effective shearing gap

- 1: rotary comminutor
- 2: comminuting stage
- 3: stator element
- 4: rotor element
- 5: operative surface of stator element 3
- 6: operative surface of rotor element 4
- 7: operative gap of stage 1
- 8: cutting element of operative surface 5 of stator 3
- 9: cutting element of operative surface 6 of rotor 4
- 10: cutting edge of cutting element 8
- 11: cutting edge of cutting element 9

- 21: supplied starting material
- 22: feed of starting material
- 23: cutting machine
- 24: feed of precut material
- 25: conditioning vessel
- 26: mixing zone of conditioning vessel
- 27: stirring means in the mixing zone
- 28: settling zone of conditioning vessel
- 29: feed of aqueous juice
- 30: aqueous juice
- 31: discharge and disposal of foreign material
- 32: feed of mixture from mixing zone
- 33: comminutor
- 34: feed of slurry from comminutor
- 35: separator
- 36: aqueous juice from separator
- 37: mush from separator
- 38: removed mush
- 39: branching point
- 40: major flow portion
- 41: minor flow portion
- 42: aqueous juice processing
- 43: feed of processed aqueous juice
- 44: separator
- 45: feed of organic products
- 46: removed organic products
- 47: feed of residual fluid
- 48: anaerobic fermenter
- 49: delivery of biogas
- 50: removed biogas
- 51: delivery of clarified water
- 52: removed clarified water

## Claims

1. A method of continuous separation of vegetable biomass into a fluid phase essentially comprised of aqueous juice and a solids containing phase of pulpy consistence, both phases being adapted for further utilization, wherein the vegetable biomass is provided in a naturally moist state and admixed to a recycled portion of the aqueous juice for suspension therein, and wherein the flowing suspension of vegetable biomass in aqueous juice is processed for fibre production,
**characterized in that**
said processing involves the generation of a gradient of flow speed within the flowing suspension, which gradient is sufficient for acting upon cells of the vegetable biomass to open said cells and allow a content thereof to be liberated into the aqueous juice, whereas a residue is left that is mainly made up of fibres and ends up in the solids containing phase.

2. The method of claim 1, involving the method steps of
- providing a conditioning vessel (25) having a mixing zone (26) equipped with stirring means (27);
- feeding (24) the vegetable biomass (21) to the mixing zone (26) of the conditioning vessel;
- feeding (29) aqueous juice (30) recycled (40) from a subsequent step of the method to the mixing zone (26) of the conditioning vessel;
- stirring (27) the vegetable biomass and aqueous juice contained in the mixing zone (26) of the conditioning vessel (25) to produce a mixture thereof;
- providing a processing apparatus (33) in which the flowing suspension of vegetable biomass in aqueous juice is processed for fibre production;
- feeding the mixture (32) from the mixing zone (26) of the conditioning vessel (25) to the processing apparatus (33) while operating the latter, to produce a slurry of processed biomass material suspended in aqueous juice;
- feeding the slurry (34) from the processing apparatus (33) to a separator (35) for partitioning the slurry into aqueous juice and mush;
- removing the mush (37) from the separator (35) for further utilization of the removed mush;
- removing the aqueous juice (36) from the separator (35);
- dividing the removed aqueous juice (39) into respective major (40) and minor (41) portions;
- recycling (29) the aqueous juice (30) of the major portion (40) to the mixing zone (26) of the conditioning vessel (25); and
- providing for utilization (42-52) of the aqueous juice of the minor portion (41);
**characterized in that**
the major (40) and minor (41) portions of the removed aqueous juice (36) are adjusted to have a mutual ratio by weight that provides for approximate balance by weight between water contained both in the aqueous juice of the minor portion (41) and in form of moisture in the removed mush (37-38), on the one hand, and in form of moisture in the vegetable biomass (22) provided as starting material (21), on the other hand.

3. The method of claim 2, in which the processing apparatus is a rotary comminutor (1) having at least one comminuting stage (2) comprised of respective stator (3) and rotor (4) elements associated with each other and having respective operative surfaces (5-6) spaced from each other by an associated operative gap (7) of the stage (2), said surfaces (5-6) being arranged to face each other across the associated operative gap (7), each of said surfaces (5-6) being equipped with cutting elements (8-9) that are directed into the associated operative gap (7) and each terminated therein by a respective cutting edge (10-11), an effective shearing gap of a comminuting stage (2) being defined as a smallest distance of approach between the respective cutting edges (10-11) of the one and the other operative surface (5-6) in the associated operative gap (7) of the comminuting stage (2) when the comminutor (1) is operated,
**characterized in that**
a final comminuting stage (2) of the comminutor has an effective shearing gap (7) whose width is larger than 10 times a predetermined maximum fibre thickness to be produced to end up in the solids containing phase.

4. The method of claim 2, in which the processing apparatus is a shearing apparatus having at least one shearing stage comprised of respective stator and rotor elements associated with each other and having respective shearing surfaces spaced from each other by an associated effective shearing gap of the stage, said surfaces being arranged to face each other across the associated effective shearing gap,
**characterized in that**
a final shearing stage of the shearing apparatus has an effective shearing gap whose width is larger than 10 times a predetermined maximum fibre width to be produced to end up in the solids containing phase.

5. The method of any of claims 3 and 4, in which in any stage of the processing apparatus the effective shearing gap has a width that is larger than 1 mm.

6. The method of claim 2, in which a conditioning vessel (25) is provided that has a settling zone (28) located below the mixing zone (26) and in which, while the mixture of the starting material (24) and the aqueous juice (29) is being stirred, any accompanying material denser than vegetable biomass that will have entered (24) the conditioning vessel (25) together with the starting biomass material (21) is allowed to separate by gravity from the stirred mixture and to sink from the mixing zone (26) of the conditioning vessel (27) to the settling zone (28) of the conditioning vessel (25) to be collected therein and subsequently disposed of (31).

7. The method of any of claims 2 to 6, in which the ratio by weight of the major portion (40) of the aqueous juice to the minor portion (41) of the aqueous juice is greater than 4:1.

8. The method of any of claims 1 to 7, in which the supplied (22) vegetable biomass (21) is precut (23) for reduction in size prior to being fed (24) to the mixing zone (26) of the conditioning vessel (25).

9. The method of any of claims 1 to 8, in which the removed mush (38) is utilized for the production of fibre products and optionally the extraction of other organic products.

10. The method of any of claims 1 to 8, in which the aqueous juice of the minor portion (41) is utilized (42-43) for the extraction of organic products (44-46).

11. The method of any of claims 1 to 8, in which the aqueous juice of the minor portion (41) is utilized (42-43, 47) for the fermentation (48) of organic products and concomitant production of biogas (49-50) that is utilized to provide combustion heat.

12. The method of claim 11, in which the combustion heat is utilized for drying the produced fibre products (38) and/or the extracted organic products (46).

13. The method of any of claims 9 to 11, in which the extraction of organic products (45-46) includes a fermentation or enzyme degradation and concomitant production of fermentation or enzyme degradation products.

## Patentansprüche

1. Verfahren zum kontinuierlichen Auftrennen einer pflanzlichen Biomasse in eine Flüssigphase, die im Wesentlichen aus einem wässrigen Saft besteht und in eine Feststoffe enthaltende Phase von breiartiger Konsistenz, wobei beide Phasen zur weiteren Verwendung vorgesehen sind, wobei die pflanzliche Biomasse in einem natürlich feuchten Zustand bereitgestellt und einem rückgeführten Anteil des wässrigen Safts zur Suspension darin zugemischt wird und wobei die fließende Suspension der pflanzlichen Biomasse in dem wässrigen Saft zur Faserherstellung verarbeitet wird,
**dadurch gekennzeichnet, dass**
das Verarbeiten die Erzeugung eines Gradienten der Fließgeschwindigkeit innerhalb der fließenden Suspension umfasst, wobei der Gradient ausreichend ist, um auf Zellen der pflanzlichen Biomasse einzuwirken, um diese Zellen zu öffnen und um es einem Inhalt derselben zu erlauben, in den wässrigen Saft freigesetzt zu werden, während ein Rückstand zurückbleibt, der im Wesentlichen aus Fasern besteht und der in der Feststoffe enthaltenden Phase endet.

2. Verfahren nach Anspruch 1, das die Verfahrensschritte umfasst:
- Bereitstellen eines Konditionierbehälters (25), der eine Mischzone (26) aufweist, die mit Rührmittein (27) ausgestattet ist;
- Zuführen (24) der pflanzlichen Biomasse (21) in die Mischzone (26) des Konditionierbehälters;
- Zuführen (19) von wässrigem Saft (30), der von einem vorhergehenden Schritt des Verfahrens zurückgeführt wird, in die Mischzone (26) des Konditionierbehälters;
- Rühren (27) der pflanzlichen Biomasse und des wässrigen Safts, die in der Mischzone (26) des Konditionierbehälters (25) enthalten sind, um eine Mischung derselben zu erzeugen;
- Bereitstellen einer Verarbeitungsvorrichtung (33) in der die fließende Suspension der pflanzlichen Biomasse in dem wässrigen Saft zur Faserherstellung verarbeitet wird;
- Zuführen der Mischung (32) aus der Mischzone (26) des Konditionierbehälters (25) in die Verarbeitungsvorrichtung (33) während des Betriebs der letzteren, um einen Brei von verarbeitetem Biomassematerial suspendiert in wässrigem Saft zu erzeugen;
- Zuführen des Breis (34) von der Verarbeitungsvorrichtung (33) zu einem Separator (35) zum Aufteilen des Breis in wässrigen Saft und breiartige Masse;
- Entfernen der breiartigen Masse (37) aus dem Separator (35) zur weiteren Verwendung der entfernten breiartigen Masse;
- Entfernen des wässrigen Safts (36) aus dem Separator (35);
- Unterteilen des entfernten wässrigen Safts (39) in jeweils einen größeren (40) und einen kleinern (41) Anteil;
- Zurückführen (29) des wässrigen Safts (30) des größeren Anteils (40) in die Mischzone (26) des Konditionierbehälters (25); und
- Bereitstellen des wässrigen Safts der kleineren Portion (41) zur Verwendung (42 bis 52);
**dadurch gekennzeichnet, dass**
der größere (40) und der kleinere (41) Anteil des entfernten wässrigen Safts (36) so eingestellt werden, dass sie ein wechselseitiges Gewichtsverhältnis aufweisen, das für einen ungefähren Gewichtsausgleich zwischen dem Wassergehalt, der auf der einen Seite sowohl in dem wässrigen Saft des kleineren Anteils (41) und in Form der Feuchtigkeit der entfernten breiartigen Masse und der auf der anderen Seite in Form der Feuchtigkeit in der pflanzlichen Biomasse (22), die als Ausgangsmaterial (21) bereitgestellt wird, vorhanden ist, sorgt.

3. Verfahren nach Anspruch 2, wobei die Verarbeitungsvorrichtung ein Rotationszerkleinerer (1) mit mindestens einer Zerkleinerungsstufe (2) ist, die von jeweiligen Stator (3)- und Rotor (4)-Elementen ausgebildet wird, welche einander zugeordnet sind und jeweils aktive Oberflächen (5-6) aufweisen, die voneinander über einen aktiven Spalt (7) der Stufe (2) beabstandet sind, wobei die Oberflächen (5-6) angeordnet sind, um sich über den zugehörigen aktiven Spalt (7) einander gegenüberzuliegen, wobei jede der Oberflächen (5-6) mit Schneidelementen (8 -9) versehen ist, die in den zugehörigen aktiven Spalt (7) gerichtet sind und darin jeweils mit einer jeweiligen Schneidkante (10-11) enden, wobei ein effektiver Scherspalt einer Zerkleinerungsstufe (2) als ein kleinster Annäherungsabstand zwischen den jeweiligen Schneidkanten (10 bis 11) der einen und der anderen aktiven Oberfläche (5-6) in dem zugehörigen aktiven Spalt (7) der Zerkleinerungsstufe (2) definiert ist, wenn der Zerkleinerer (1) betrieben wird,
**dadurch gekennzeichnet, dass**
eine letzte Zerkleinerungsstufe (2) des Zerkleinerers einen effektiven Scherspalt (7) aufweist, dessen Weite größer als das 10-fache einer vorbestimmten maximalen Faserdicke ist, die hergestellt wird, um in der Feststoffe enthaltenden Phase zu enden.

4. Verfahren nach Anspruch 2, wobei die Verarbeitungsvorrichtung eine Schervorrichtung ist, die mindestens eine Scherstufe aufweist, die aus jeweiligen Stator- und Rotorelementen ausgebildet ist, die einander zugeordnet sind und jeweilige Scherflächen aufweisen, welche durch einen zugehörigen effektiven Scherspalt der Stufe voneinander beabstandet sind, wobei die Oberflächen angeordnet sind, um einander über den zugehörigen effektiven Scherspalt gegenüberzuliegen,
**dadurch gekennzeichnet, dass**
eine letzte Scherstufe der Schervorrichtung einen effektiven Scherspalt aufweist, dessen Weite größer als das 10-fache einer vorbestimmten maximalen Faserweite ist, die hergestellt wird, um in der Feststoffe enthaltenden Phase zu enden.

5. Verfahren nach einem der Ansprüche 3 und 4, wobei in jeder Stufe der Verarbeitungsvorrichtung der effektive Scherspalt eine Weite aufweist, die größer als 1 mm ist.

6. Verfahren nach Anspruch 2, wobei ein Konditionierbehälter (25) vorgesehen ist, der eine Absetzzone (28) aufweist, welche unterhalb der Mischzone (26) angeordnet ist und in der, während die Mischung des Ausgangsmaterials (24) und des wässrigen Safts (29) gerührt wird, jegliches Begleitmaterial, das dichter als die pflanzliche Biomasse ist und das in den Konditionierbehälter (25) zusammen mit dem Ausgangsbiomassematerial (21) eingetreten (24) sein wird, absinken kann, um sich durch Schwerkraft von der gerührten Mischung abzutrennen und um aus der Mischzone (26) des Konditionierbehälters (27) zur Absetzzone (28) des Konditionierbehälters (25) abzusinken, um darin gesammelt und anschließend entsorgt (31) zu werden.

7. Verfahren nach einem der Ansprüche 2 bis 6, wobei das Gewichtsverhältnis des größeren Anteils (40) des wässrigen Safts zu dem kleineren Anteil (41) des wässrigen Safts größer als 4:1 ist.

8. Verfahren nach einem der Ansprüche 1 bis 7, wobei die zugeführte (22) pflanzliche Biomasse (21) zur Reduktion in der Größe vorgeschnitten (23) wird, bevor sie der Mischzone (26) des Konditionierbehälters (25) zugeführt (24) wird.

9. Verfahren nach einem der Ansprüche 1 bis 8, wobei die entfernte breiartige Masse (38) für die Herstellung von Faserprodukten verwendet wird und optional für die Extraktion anderer organischer Produkte.

10. Verfahren nach einem der Ansprüche 1 bis 8, wobei der wässrige Saft des kleineren Anteils (41) für die Extraktion von organischen Produkten (44-46) verwendet wird (42-43).

11. Verfahren nach einem der Ansprüche 1 bis 8, wobei der wässrige Saft des kleineren Anteils (41) für die Fermentaion (48) von organischen Produkten und die gleichzeitig erfolgende Herstellung von Biogas (49-50) verwendet wird, das verwendet wird, um Verbrennungswärme bereitzustellen.

12. Verfahren nach Anspruch 11, wobei die Verbrennungswärme zum Trocknen der Faserprodukte (38) und/oder der extrahierten organischen Produkte (46) verwendet wird.

13. Verfahren nach einem der Ansprüche 9 bis 11, wobei die Extraktion der organischen Produkte (45-46) eine Fermentation oder einen enzymatischen Abbau und eine gleichzeitige Herstellung von Fermentations- bzw. Enzymabbauprodukten umfasst.

## Revendications

1. Procédé de séparation continue de biomasse végétale dans une phase fluide essentiellement composée de jus aqueux et une phase renferment des solides de consistance pulpeuse, les deux phases étant adaptées pour l'utilisation ultérieure, dans lequel la biomasse végétale est prévue dans un état naturellement humide et mélangée à une partie recyclée de jus aqueux pour la suspension à l'intérieur de celle-ci, et dans lequel la suspension fluide de biomasse végétale dans le jus aqueux est traitée pour la production de fibres,
**caractérisé en ce que** ledit traitement comprend la génération d'un gradient de vitesse d'écoulement dans la suspension fluide, lequel gradient est suffisant pour agir sur les cellules de la biomasse végétale pour ouvrir lesdites cellules et permettre de libérer leur contenu dans le jus aqueux, alors que l'on laisse un résidu qui est principalement composé de fibres et se termine dans la phase renfermant des solides.

2. Procédé selon la revendication 1 impliquant les étapes de procédé consistant à :
- prévoir un récipient de conditionnement (25) doté d'une zone de mélange (26) équipée avec des moyens d'agitation (27) ;
- alimenter (24) la biomasse végétale (21) à la zone de mélange (26) du récipient de conditionnement ;
- alimenter (29) le jus aqueux (30) recyclé (40) à partir d'une étape successive du procédé à la zone de mélange (26) du récipient de conditionnement ;
- agiter (27) la biomasse végétale et le jus aqueux contenus dans la zone de mélange (26) du récipient de conditionnement (25) afin d'en produire un mélange ;
- prévoir un dispositif de traitement (33) dans lequel la suspension fluide de biomasse végétale dans le jus aqueux est traitée pour la production de fibres ;
- alimenter le mélange (32) depuis la zone de mélange (26) du récipient de conditionnement (25) au dispositif de traitement (33) tout en le faisant fonctionner, afin de produire une pâte de matière de biomasse traitée en suspension dans le jus aqueux ;
- alimenter la pâte (34) à partir du dispositif de traitement (33) à un séparateur (35) pour séparer la pâte en jus aqueux et bouillie ;
- retirer la bouillie (37) du séparateur (35) pour l'utilisation ultérieure de la bouille retirée ;
- retirer le jus aqueux (36) du séparateur (35) ;
- diviser le jus aqueux retiré (39) en parties principale (40) et secondaire (41) respectives ;
- recycler (39) le jus aqueux (30) de la partie principale (40) dans la zone de mélange (26) du récipient de conditionnement (25) ; et
- prévoir l'utilisation (42 - 52) du jus aqueux de la partie secondaire (41) ;
**caractérisé en ce que** les parties principale (40) et secondaire (41) du jus aqueux retiré (36) sont ajustées pour avoir un rapport mutuel en poids qui assure l'équilibre approximatif en poids entre l'eau contenue à la fois dans le jus aqueux de la partie secondaire (41) et sous la forme d'humidité dans la bouillie retirée (37 - 38), d'une part, et sous la forme d'humidité dans la biomasse végétale (22) prévue en tant que matière de départ (21), d'autre part.

3. Procédé selon la revendication 2, dans lequel le dispositif de traitement est un broyeur rotatif (1) ayant au moins un étage de broyage (2) composé des éléments de stator (3) et de rotor (4) respectifs associés entre eux et ayant des surfaces de fonctionnement respectives (5 - 6) espacées l'une de l'autre par un espace de fonctionnement associé (7) de l'étage (2), lesdites surfaces (5 - 6) étant agencées pour se faire face entre elles sur l'espace de fonctionnement associé (7), chacune desdites surfaces (5 - 6) étant équipée avec des éléments de coupe (8 - 9) qui sont dirigés dans l'espace de fonctionnement associé (7) et terminée chacune à l'intérieur de celui-ci par un bord de coupe respectif (10 - 11), un espace de cisaillement efficace d'un étage de broyage (2) étant défini comme étant la plus petite distance d'approche entre les bords de coupe respectifs (10 - 11) de l'une et de l'autre surface de fonctionnement (5 - 6) dans l'espace de fonctionnement associé (7) de l'étage de broyage (2) lorsque le broyeur (1) fonctionne,
**caractérisé en ce qu'**un étage de broyage final (2) du broyeur possède un espace de cisaillement efficace (7) dont la largeur est supérieure à 10 fois une épaisseur de fibre maximum prédéterminée à produire pour finir dans la phase contenant des solides.

4. Procédé selon la revendication 2, dans lequel le dispositif de traitement est un dispositif de cisaillement ayant au moins un étage de cisaillement composé d'éléments de stator et de rotor respectifs associés entre eux et ayant des surfaces de cisaillement respectives espacées l'une de l'autre par un espace de cisaillement efficace associé de l'étage, lesdites surfaces étant agencées pour se faire face entre elles sur l'espace de cisaillement efficace associé,
**caractérisé en ce qu'**un étage de cisaillement final du dispositif de cisaillement possède un espace de cisaillement efficace dont la largeur est supérieure à 10 fois une largeur de fibre maximum prédéterminée à produire pour se finir dans la phase renfermant des solides.

5. Procédé selon l'une quelconque des revendications 3 et 4, dans lequel dans l'un quelconque des étages du dispositif de traitement, l'espace de cisaillement efficace a une largeur qui est supérieure à 1 mm.

6. Procédé selon la revendication 2, dans lequel on prévoit un récipient de conditionnement (25) qui a une zone de décantation (28) située au-dessous de la zone de mélange (26) et dans laquelle, alors que le mélange de la matière de départ (24) et du jus aqueux (29) est agité, toute matière d'accompagnement plus dense que la biomasse végétale qui est entrée (24) dans le récipient de conditionnement (25) conjointement à la matière de biomasse de départ (21) est autorisée à se séparer par gravité, du mélange agité et à s'enfoncer de la zone de mélange (26) du récipient de conditionnement (27) à la zone de décantation (28) du récipient de conditionnement (25) pour y être collectée et successivement jetée (31).

7. Procédé selon l'une quelconque des revendications 2 à 6, dans lequel le rapport en poids de la partie principale (40) du jus aqueux sur la partie secondaire (41) du jus aqueux est supérieur à 4 : 1.

8. Procédé selon l'une quelconque des revendications 1 à 7, dans lequel la biomasse végétale (21) alimentée (22) est précoupée (23) pour la réduction de taille avant d'être alimentée (24) à la zone de mélange (26) du récipient de conditionnement (25).

9. Procédé selon l'une quelconque des revendications 1 à 8, dans lequel la bouillie retirée (38) est utilisée pour la production de produits en fibres et facultativement l'extraction d'autres produits organiques.

10. Procédé selon l'une quelconque des revendications 1 à 8, dans lequel le jus aqueux de la partie secondaire (41) est utilisé (42 - 43) pour l'extraction de produits organiques (44 - 46).

11. Procédé selon l'une quelconque des revendications 1 à 8, dans lequel le jus aqueux de la partie secondaire (41) est utilisé (42 - 43, 47) pour la fermentation (48) des produits organiques et la production concomitante de biogaz (49 - 50) qui est utilisé pour fournir de la chaleur de combustion.

12. Procédé selon la revendication 11, dans lequel la chaleur de combustion est utilisée pour sécher les produits en fibres produits (38) et/ou les produits organiques extraits (46).

13. Procédé selon l'une quelconque des revendications 9 à 11, dans lequel l'extraction des produits organiques (45 - 46) comprend une fermentation ou un dégradation d'enzymes et la production concomitante de produits de fermentation ou de produits de dégradation d'enzyme.
